# EUROPÄISCHE PATENTANMELDUNG

(11) **EP 1 233 467 A2**
(43) Veröffentlichungstag der Anmeldung: **21.08.2002**
(21) Anmeldenummer: 02002910.4
(22) Anmeldetag: 09.02.2002
(51) Int. Cl.: H01M 8/04, H01M 8/06

(54) **Verfahren und Vorrichtung zur wechselseitigen Kühlung und Vorwärmung gekoppelter elektrochemischer Wandler**

(30) Priorität: 17.02.2001 DE 10107559
(71) Anmelder: ABB Research Ltd., 8050 Zürich (CH)
(72) Erfinder: Krokoszinski, Hans-Joachim, Dr.rer.nat., 69226 Nussloch (DE); Gilbers, Dieter, Dipl.-Ing., 68623 Lampertheim (DE)
(74) Vertreter: Miller, Toivo

(57) **Zusammenfassung**

Verfahren und Vorrichtung zur wechselseitigen Kühlung und Vorwärmung gekoppelter elektrochemischer Wandler (3,5), indem die Kühlmittelkreisläufe abwechselnd betriebener elektrochemischer Wandler (3,5) über mindestens ein gemeinsames Kühlmittelreservoir (43) miteinander gekoppelt sind und die Temperatur T_{K} des Kühlmittels (44) des Kühlmittelreservoirs (43) mittels einer Temperaturregelvorrichtung mit Temperaturmesser, Sollwertvergleicher (54) und mindestens einem, mit dem Kühlmittelreservoir (43) gekoppelten Rückkühler (52) auf einen der höchsten Vorlauftemperatur entsprechenden Sollwert Tₛ geregelt wird, so daß die Abwärme der aktiv geschalteten Wandler vermittels des gemeinsamen Kühlmittelreservoirs (43) zur Vorwärmung der inaktiven Wandler aufgewendet wird. Bei differierenden Vorlauftemperaturen (T1,T2) der elektrochemischen Wandler (3,5) wird der Ausgang des Rückkühlers (52) über ein jeweils zwischengeschaltetes Regelventil (55) sowohl mit dem Kühlmittelreservoir (43) als auch mit dem Kühlmittelzulauf bzw. der Zuleitung (48) des jeweiligen Wandlers (5), dessen Vorlauftemperatur (T2) niedriger als der vorgegebene Sollwert Tₛ ist; verbunden, um durch temperaturgeregelte Beimischung von kühlerem Kühlmittel (44) aus dem Rückkühler (52) in den jeweiligen Kühlmittelzulauf (48) eine Einstellung der optimalen Vorlauftemperatur des jeweiligen elektrochemischen Wandlers (5) zu erreichen.

## Beschreibung

Die Erfindung betrifft ein Verfahren und eine Vorrichtung zur Kühlung und Vorwärmung gekoppelter elektrochemischer Wandler zur Gewährleistung der Betriebsbereitschaft auch temporär inaktiv geschalteter elektrochemischer Wandler, welche bevorzugt bei der Nutzung und Speicherung von Energie aus regenerativen Energiequellen, zum Beispiel der Windenergie, Sonnenenergie und Gezeitenenergie, in entsprechenden Kraftanlagen, wie beispielsweise Windparks, Photovoltaikanlagen sowie Gezeitenkraftanlagen, aber auch in der Hausanlagentechnik eingesetzt sind.

Die Erschließung und Nutzbarmachung alternativer, regenerativer Energiequellen, wie beispielsweise der Wind- und Gezeitenenergie gewinnt vor dem Hintergrund sich langfristig erschöpfender fossiler Brennstoffe immer mehr an Bedeutung.

Da im Bereich der regenerativen Energiequellen, insbesondere der Wind-, Strömungsund Gezeitenenergie sowie der Solar- oder Sonnenenergie, die Energieumwandlung jedoch stets unabhängig vom jeweiligen Bedarf erfolgt, stellt sich hier immer wieder die Frage nach einem wirtschaftlichen und effizienten Verfahren zur Energiezwischenspeicherung.

Reicht beispielsweise bei standortbedingten Witterungsverhältnissen eine Blattwinkelverstellung der Rotorblätter einer Windkraftanlage nicht mehr aus, um auftretende Windstärkeunterschiede auszugleichen, so kann für gewöhnlich nicht die volle zur Verfügung stehende Leistung oder Energie umgewandelt werden, wodurch eine vergleichsweise große Energiemenge ungenutzt verloren geht.

Um jedoch auch diese Energien nicht ungenutzt verstreichen zu lassen, ist ein Speichermedium erforderlich, das eine zeitweilig überschüssige Energiemenge für einen begrenzten Zeitraum aufnehmen kann, um sie dann bei Bedarf, beispielsweise bei Spitzenlast, wieder an das Versorgungsnetz abzugeben.

Für die Energiespeicherung sind verschiedene Konzepte bekannt, wie beispielsweise Schwungmassenspeicher, Supraleitende Magnetische Energiespeicher (SMES), Batteriespeicheranlagen sowie chemische Energiespeicher auf Wasserstoff-, Propan- oder Methanbasis.

Von all den vorgenannten Konzepten erscheint der chemische Energiespeicher auf Wasserstoffbasis bezüglich seiner Wirtschaftlichkeit und Umweltverträglichkeit jedoch als das am besten geeignete Energiespeichersystem mit dem größten Durchsetzungsvermögen bzw. Entwicklungspotential.

Bei einem demgemäßen, wasserstoffbasierten Energiespeichersystem wird die anfallende elektrische Energie oder auftretende elektrische Leistung zur elektrolytischen Erzeugung von Wasserstoff eingesetzt, dessen Speicherung zum Beispiel in Druckgastanks oder Festkörperspeichern, wie beispielsweise Metallhydridspeicher oder Nanotubes, erfolgt und in Bedarfszeiten die in chemischer Form gespeicherte Energie durch Umwandlung des gespeicherten Wasserstoffs, vorzugsweise mittels einer Brennstoffzellenanordnung, wieder in elektrische Energie bzw. Leistung rücküberführt.

Sowohl ein zur Elektrolyse eingesetzter Elektrolyseur, als auch eine für die Rücküberführung von chemischer in elektrische Energie eingesetzte Brennstoffzellenanordnung arbeiten mit einem Wirkungsgrad, der von der Belastung des jeweiligen elektrochemischen Wandlers abhängt und unterhalb eines Wertes von Eins liegt.

Der maßgebliche Teil der Energiedifferenz zwischen ausgangsseitig genutzter und eingangsseitig hineingesteckter Energie fällt als Wärme an. Dies bedeutet, daß im Falle des Elektrolyseurs, zwischen aufgewendeter elektrischer und gespeicherter chemischer Energie und im Falle der Brennstoffzellenanordnung, zwischen aufgewendeter chemischer und erzeugter elektrischer Energie auftretende Energiedifferenzen in Form von Wärme an die Umgebung abgegeben werden.

Ein geringer Energieanteil wird noch für den Betrieb von Hilfsgeräten, wie beispielsweise Meßgeräte und Pumpen, benötigt.

Die anfallende Abwärme zeitgemäßer stationärer Brennstoffzellenanordnungen wird in bekannter Weise vermittels Kraft-Wärme-Kopplungen (engl. CHP = Combinded Heat and Power) für die Heizung eines zugehörigen Gebäudes bzw. Gerätehauses, oder bei großem Überschuß auch für die Fernheizung von Gebäuden eingesetzt.

Der erreichbare Wirkungsgrad ist hierbei außer von der auftretenden Last auch von der Temperatur der elektrochemischen Zellen der Wandler abhängig. Der optimale Wirkungsgrad wird bei Elektrolyseuren bei einer Zellentemperatur von ca. 80°C und bei Brennstoffzellen, je nach Arbeitsprinzip, bei einer Zellentemperatur von etwa 70-100°C bei einer AFC (Alkaline Fuel Cell), 50-100°C bei einer PEMFC (Proton Exchange Membrane Fuel Cell), 160-210°C bei einer PAFC (Phosphoric Acid Fuel Cells), 650°C bei einer MCFC (Molten Carbonate Fuel Cell) oder gar 800-1000°C bei einer SOFC (Solid Oxide Fuel Cell) erreicht.

Je höher die erforderliche Zellentemperatur und je größer die Brennstoffzelle, desto länger dauert es, bis sie ihre optimale Betriebstemperatur erreicht hat. Eine PAFC der Firma ONSI braucht beispielsweise etwa 4 bis 5 Stunden, bis sie, ausgehend von Zimmertemperatur, ihre volle Leistungsbereitschaft erreicht hat. Um dies überhaupt zu ermöglichen, muß sie unter Verwendung von Brennstoff zusätzlich beheizt werden.

In laufendem Betrieb, bei Belastung über einen längeren Zeitraum fällt dann so viel Verlustwärme an, daß diese mittels eines Kühlkreislaufs aus der Zelle abgeführt werden muß, um diese vor weiterem Schaden zu bewahren.

Bei mehreren eingesetzten, abwechselnd aktivierten bzw. in Betrieb genommenen elektrochemischen Wandlern sind immer, wenn ein oder mehrere Wandler arbeiten, bei einer wasserstoffbasierten Energiespeichervorrichtung beispielsweise alternativ jeweils Elektrolyseur oder Brennstoffzellenanordnung, bzw. sich in ihrem jeweiligen aktiven Betriebszustand befinden, die anderen, nicht aktiv geschalteten Wandler unbelastet und kühlen demgemäß je nach Zeitdauer ihres Ruhe- bzw. Bereitschaftszustandes mehr oder weniger stark aus bzw. ab.

Soll ein bis dato inaktiver Wandler nun aktiviert bzw. in Betrieb genommen werden, so hat er in den meisten Fällen seinen optimalen Betriebstemperaturbereich bereits verlassen und bedarf zur Erreichung eines optimalen Wirkungsgrades unter Zuführung zusätzlicher Energie wieder einer längeren Aufwärm- oder Anlaufphase.

So darf beispielsweise die PAFC von ONSI eine Temperatur von 50°C nicht unterschreiten, da sonst bei 42°C das in der Zelle befindliche H₃PO₄ beginnt auszukristallisieren und die Brennstoffzelle nachhaltig zu beschädigen. Jedoch sind selbst bei einer Bereitschaftstemperatur von 50°C nachteilig nahezu 3,5 Stunden von Nöten um die Brennstoffzelle von 50°C auf eine optimale Betriebstemperatur von ca. 180°C aufzuheizen. In Folge der zusätzlich erforderlichen Aufwendungen zum An- bzw. Aufheizen der Brennstoffzellenanordnung ergeben sich kostenintensive Zeit- und Energieverluste beim Betrieb der Anlage, die ihrer Wirtschaftlichkeit und Effizienz abträglich sind.

Der Erfindung liegt die Aufgabenstellung zugrunde, bei abwechselnd betriebenen elektrochemischen Wandlern unter Erhalt und Gewährleistung eines maximalen Wirkungsgrades eine nahezu verzögerungsfreie Umkehrung oder Umschaltung der Betriebszustände der eingesetzten Wandler zu ermöglichen.

Diese Aufgabe wird durch ein Verfahren und eine Vorrichtung zur wechselseitigen Kühlung und Vorwärmung gekoppelter elektrochemischer Wandler, insbesondere einer oder mehrerer Brennstoffzellenanordnungen und eines oder mehrerer Elektrolyseure, gelöst, indem die zeitweise inaktiv geschalteten Wandler vermittels eines gemeinsamen Kühlmittelreservoirs durch die Abwärme der aktiv geschalteten Wandler auf ihre optimale Betriebstemperatur vorgewärmt werden, wodurch auf den Einsatz zusätzlicher, externer Heizelemente weitgehend verzichtet und die inaktiven bzw. inaktiv geschalteten Wandler aufgrund der durch die Vorwärmung gewährleisteten Betriebsbereitschaft bei maximalem Wirkungsgrad in kürzester Zeit in Betrieb genommen werden können.

Erfindungsgemäß werden hierzu die Kühlkreisläufe von mindestens zwei elektrochemischen Wandlern, beispielsweise einem Elektrolyseur und einer Brennstoffzellenanordnung, über ein gemeinsames Kühlmittelreservoir mit Rückkühler mit Temperaturregelvorrrichtung gekoppelt, um mit Hilfe der Abwärme der jeweils aktiv geschalteten Geräte die inaktiven Geräte auf Temperatur zu halten, d.h. der Kühlkreislauf wird zum Heizkreislauf umkonfiguriert, wenn vom jeweiligen Wandler keine Verlustwärme anfällt.

Im Falle, daß die Vorwärm- bzw. -lauftemperaturen der beiden abwechselnd betriebenen elektrochemischen Wandler- bzw. Gerätegruppen differieren, wird die Temperatur des Kühlmittels im Kühlmittelreservoir auf dem höheren der beiden Temperaturniveaus gehalten und rückgekühltes Kühlmittel in den Vorlauf der auf niedrigerer Temperatur zu haltenden Gerätegruppe hinzugemischt.

Mit der erfindungsgemäßen Kombination aus Kühl- und Heizkreislauf von gekoppelten, abwechselnd betriebenen elektrochemischen Wandlern und insbesondere von Elektrolyseur bzw. Elektrolysevorrichtung und Brennstoffzellenanordnung ergibt sich vorteilhaft, daß die inaktiv geschalteten Geräte stets auf einer optimierten Betriebstemperatur gehalten bzw. auf diese vorgewärmt werden, wodurch die einzusetzende externe Hilfsenergie für die An- bzw. Aufheizung der elektrochemischen Wandler stark reduziert oder gar vollständig eingespart werden kann. Die gilt so lange, wie zumindest eine der beiden Gerätegruppen aktiv geschaltet ist und Verlustwärme produziert.

Lediglich unter der Voraussetzung, daß das Gesamtsystem deaktiviert bzw. außer Betrieb ist, wird die Temperatur in allen Geräten entsprechend ihrer Wärmekapazität und ihrem thermischen Widerstand langsam abklingen.

Falls auch bei deaktiviertem Gesamtsystem eine optimierte Betriebstemperatur erhalten oder gewährleistet werden soll, so müsste Hilfsenergie zur Gewähr der Temperaturstabilität aufgewendet werden.

Demgemäß erreichen zeitweilig inaktiv geschaltete Geräte ihren maximalen Wirkungsgrad unmittelbar nach Aktivschalten bzw. Inbetriebnahme, d.h. der Gesamtwirkungsgrad der eingesetzten gekoppelten elektrochemischen Wandler ist höher als ohne erfindungsgemäße Kopplung der Kühlkreisläufe.

Der Rückkühler wird um denjenigen Betrag der zu kühlenden Verlustleistung entlastet, der durch die inaktiven Geräte aufgenommen und aufgrund ihrer Wärmekapazität gespeichert wird.

Folglich ist durch eine Verminderung der geforderten Leistungsaufnahme und der damit einhergehenden kleineren Dimensionierung des Rückkühlers, eine Verringerung der für den Rückkühler aufzuwendenden Installations- und Betriebskosten zu erwarten, wodurch seinerseits wiederum die Wirtschaftlichkeit bzw. der Gesamtwirkungsgrad des Systems erhöht wird.

Weitere vorteilhafte Ausgestaltungen der Erfindung sind den Figurenbeschreibungen und den abhängigen Ansprüchen zu entnehmen.

Die weitere Erläuterung und Darlegung der Erfindung erfolgt anhand von einigen Zeichnungen und Ausführungsbeispielen.

Es zeigen:
- Fig. 1: Grundschema der Energiespeicherung auf Wasserstoffbasis.
- Fig. 2: Wirkungsgradverlauf eines Elektrolyseurs.
- Fig. 3: Wirkungsgradverlauf einer Brennstoffzellenanordnung.
- Fig. 4: Heiz- und Kühlkreislauf zweier gekoppelter, abwechselnd betriebener elektrochemischer Wandlergruppen mit identischen Vorlauftemperaturen.
- Fig. 5: Heiz- und Kühlkreislauf zweier gekoppelter, abwechselnd betriebener elektrochemischer Wandlergruppen mit differierenden Vorlauftemperaturen.

Der Wunsch im Bereich regenerativer Energiequellen zeitweilig auftretende Energieoder Leistungsüberhänge nicht ungenutzt lassen zu müssen, bedingt den Einsatz einer Energiespeichervorrichtung mit geeignetem Speichermedium. Am wirtschaftlichsten und effizientesten erscheint hier eine Energiespeicherung in chemischer Form, beispielsweise auf Propan-, Methan- oder Wasserstoffbasis. Wobei unter ökologischen Gesichtspunkten wasserstoffbasierte Speichersysteme klar zu bevorzugen sind.

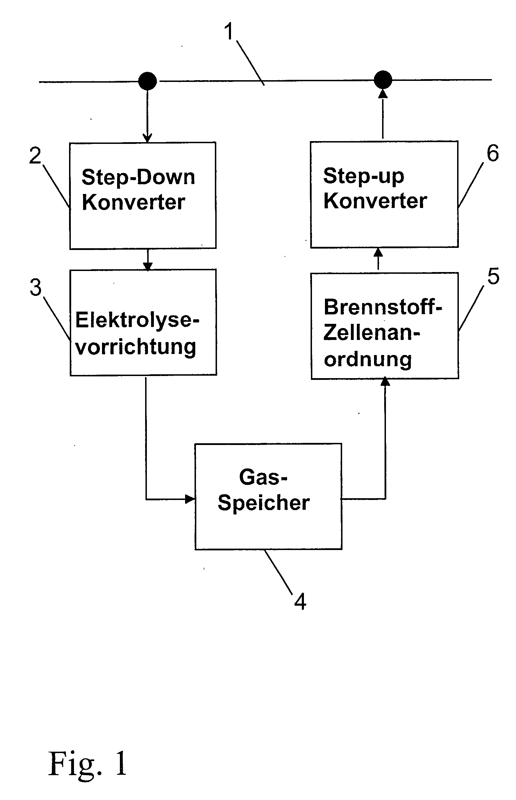

Eine Vorrichtung zur Speicherung überschüssiger elektrischer Energie in chemischer Form, insbesondere auf Wasserstoffbasis, beinhaltet mindestens zwei unterschiedliche elektrochemische Wandlergruppen. Wie in Fig. 1 gezeigt ist, wird bei wasserstoffbasierten Speicheranordnungen der zu speichernde Anteil der erzeugten elektrischen Energie über eine Sammelschiene 1 und einen elektrisch zwischengeschalteten Konverter 2 einer Elektrolysevorrichtung oder einem Elektrolyseur 3 zugeführt, um mittels Elektrolyse aus Wasser gasförmigen Wasserstoff zu erzeugen. Dieser wird anschließend in einem entsprechend ausgebildeten Gasspeicher 4, beispielsweise einem Druckgastank oder einem Metallhydridspeicher, gespeichert. In Bedarfszeiten wird der gespeicherte Wasserstoff vorzugsweise einer Brennstoffzellenanordnung 5 zugeführt, in die in geeigneter Weise auch Sauerstoff eingeleitet wird, und gemeinsam mit dem Sauerstoff in Wasser umgewandelt. Die hierbei freiwerdende elektrische Energie bzw. erzeugte elektrische Leistung wird über einen weiteren, elektrisch zwischengeschalteten Konverter 6 wieder in die Sammelschiene bzw. -leitung 1 eingespeist und einem elektrischen Versorgungsnetz zugeführt.

Statt der Brennstoffzellen 5 lassen sich jedoch prinzipiell auch geeignete, wasserstoffertüchtigte Verbrennungsmotoren mit entsprechend angekoppelten Generatoren zur Umwandlung von mechanischer in elektrische Leistung einsetzen.

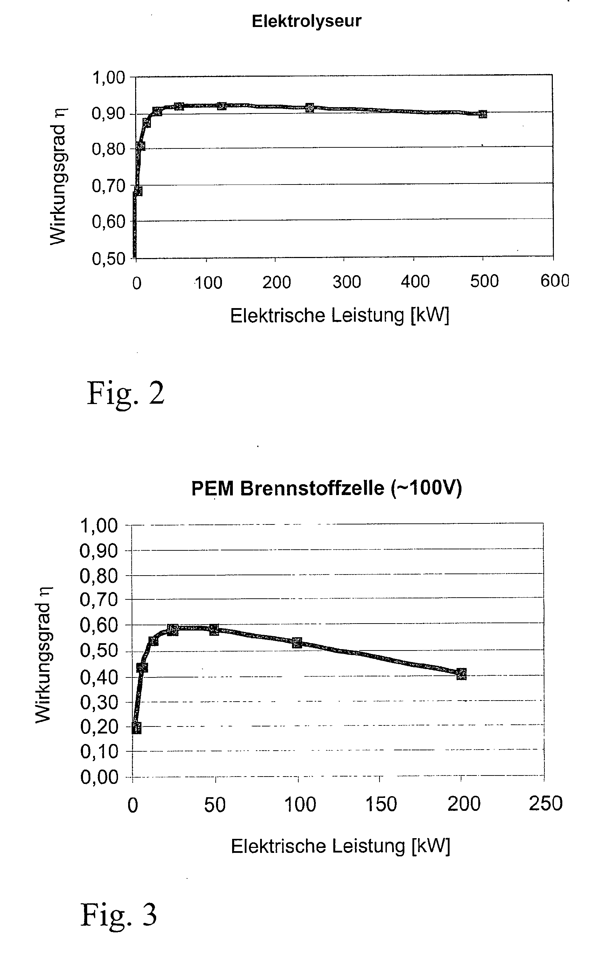

Sowohl die zur Elektrolyse eingesetzten Elektrolyseure 3 als auch die eingesetzten Brennstoffzellen 5 arbeiten mit einem Wirkungsgrad, der von der Belastung des Gerätes abhängt und mehr oder weniger deutlich unterhalb eines Wertes von Eins liegt. Dies spiegelt sich in den Figuren 2 und 3 wider.

In Fig. 2 ist der typische Verlauf des Wirkungsgrades η eines Elektrolyseurs 3 in Abhängigkeit der Last bzw. der applizierten elektrischen Leistung aufgetragen. Der dargelegte Kurvenverlauf zeigt nach Erreichen eines Maximum bei weiter zunehmender Last ein deutliches Abfallen des maximal erreichbaren Wirkungsgrades ηₘₐₓ₋

Der in Fig. 3 dargelegte Verlauf des Wirkungsgrades η einer Brennstoffzellenanordnung 5 in Abhängigkeit der auftretenden Last bzw. der der Brennstoffzellenanordnung 5 entnommenen elektrischen Leistung offenbart einen vergleichbaren Verlauf wie der in Fig. 2 dargelegte Verlauf des Wirkungsgrades η eines Elektrolyseurs 3. Auch hier erhöht sich der Wirkungsgrad η mit zunehmender Last bis zu einem Maximalwert ηₘₐₓ, um dann oberhalb eines für den Betrieb der Anordnung optimalen Lastwertes mit steigender Belastung kontinuierlich abzunehmen.

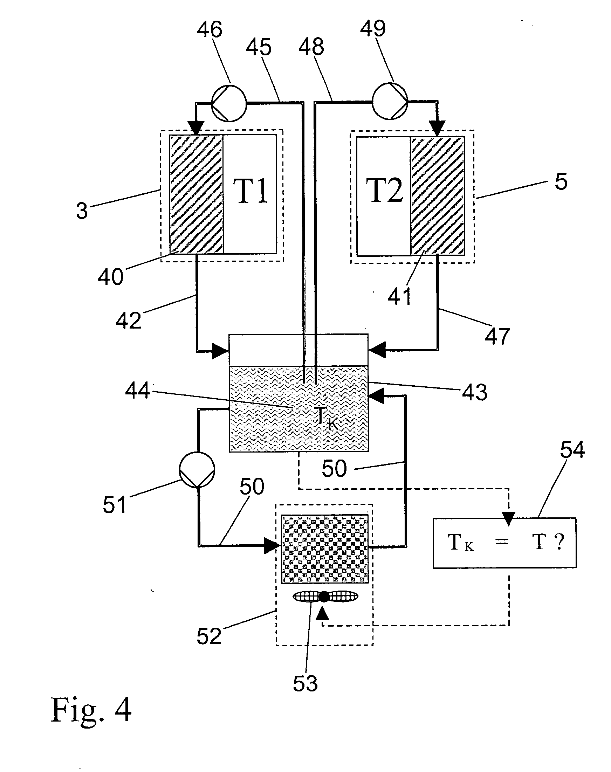

In Figur 4 ist ein Heiz-/Kühlkreislauf zweier gekoppelter, unterschiedlicher elektrochemischer Wandlergruppen 3 und 5, in Form einer Elektrolysevorrichtung 3 mit mindestens einem Elektrolyseur und einer Brennstoffzellenanordnung 5, mit integrierten Kühlern 40 und 41 sowie identischen Vorwärm- bzw. Vorlauftemperaturen T1 und T2 gezeigt. Der Kühler 40 eines oder mehrerer Elektrolyseure 3 ist hierbei ausgangsseitig über eine kühlmittelführende Leitung 42 mit einem Kühlmittelreservoir bzw. Kühlmitteltank 43 mit einer entsprechenden Menge an Kühlmittel 44 verbunden. Über eine weitere kühlmittelführende Leitung 45 wird dem Kühlmittelreservoir 43 vermittels einer Pumpe 46 ständig Kühlmittel 44 entzogen und eingangsseitig dem Kühler 40 eines oder mehrerer Elektrolyseure 3 zugeführt. Auch der Kühler 41 der Brennstoffzellenanordnung 5 ist ausgangsseitig über eine kühlmittelführende Leitung 47 mit dem Kühlmittelreservoir bzw. Kühlmitteltank 43 verbunden. Über eine weitere kühlmittelführende Leitung 48 wird dem Kühlmittelreservoir 43 vermittels einer Pumpe 49 ständig Kühlmittel 44 entzogen und eingangsseitig dem Kühler 41 der Brennstoffzellenanordnung 5 zugeführt, so daß sowohl Elektrolyseure 3, als auch Brennstoffzellenanordnung 5 auf dasselbe Kühlmittelreservoir 43 zugreifen bzw. dasselbe Kühlmittelreservoir 43 sowie Kühlmittel 44 benutzen. In einem weiteren Kühlkreislauf mit kühlmittelführenden Leistungen 50 und Pumpe 51 ist das Kühlmittelreservoir 43 mit einem Rückkühler 52 mit Ventilatoreneinheit bzw. Luftgebläse 53 in Reihe geschaltet. Die Temperatur des durch den Rückkühler 52 fließenden Kühlmittels 44 wird vermittels des Luftgebläses 53 temperaturgeregelt abgesenkt bzw. herabgesetzt, so daß sich, aufgrund des aus dem Rückkühler 52 in das Kühlmittelreservoir 43 einströmenden Kühlmittels 44, im Kühlmittelreservoir 43 eine Temperatur einstellt, die dem Sollwert T_{S} der optimalen Vorlauftemperatur bzw. Betriebstemperatur der elektrochemischen Wandler 3 und 5 entspricht. Hierzu wird mittels einer Temperaturregelvorrichtung, die auf die Ventilatoreneinheit 53 des Rückkühlers 52 sowie gegebenenfalls die Pumpe 51 wirkt, mit Temperaturmesser und Sollwertvergleicher 54 die Temperatur T_{K} des Kühlmittels 44 im Kühlmitteltank 43 bestimmt und mittels des Sollwertvergleichers 54 mit dem vorbestimmten Sollwert T_{S}, der hier den Vorlauftemperaturen T1 und T2 der elektrochemischen Wandler 3 und 5 entspricht, verglichen. Liegt der gemessene Istwert der Kühlmitteltemperatur T_{K} oberhalb der Vorlauftemperatur T1 der Elektrolysevorrichtung 3 sowie der Vorlauftemperatur T2 der Brennstoffzellenanordnung 5, wobei hier gilt T1=T2, so wird die Pumpe 51 sowie das Luftgebläse 53 in Betrieb gesetzt und das Kühlmittel 44 solange in einem Kreislauf durch den Rückkühler 52 gepumpt und mittels eines kühlenden Luftstrom heruntergekühlt, bis die Temperatur Tₖ des Kühlmittels 44 im Kühlmittelreservoir 43 dem Sollwert T_{S} der optimalen Vorlauftemperatur, mit T_{S}=T1=T2, der elektrochemischen Wandler 3 und 5 entspricht. Ist dieser Temperaturwert T_{K}=T_{S} erreicht, so schaltet das Gebläse 53 und/oder die Pumpe 51 ab.

Sind nun die beiden Wandlergruppen 3 und 5 stets abwechselnd in Betrieb bzw. aktiv geschaltet, so trägt lediglich die Abwärme der aktiven Wandlergruppe zur Erhöhung der Kühlmitteltemperatur T_{K} im Kühlmittelreservoir 43 bei. Wird nun auch der Kühler der inaktiven Wandlergruppe stetig mit dem von der aktiven Wandlergruppe erwärmten, vorzugsweise auf den Sollwert T_{S} der optimalen Vorlauftemperatur erwärmten Kühlmittel 44 durchflutet, so wird die inaktive Wandlergruppe hierdurch bereits vorgewärmt und auf effiziente sowie wirtschaftliche Art und Weise in Betriebsbereitschaft versetzt.

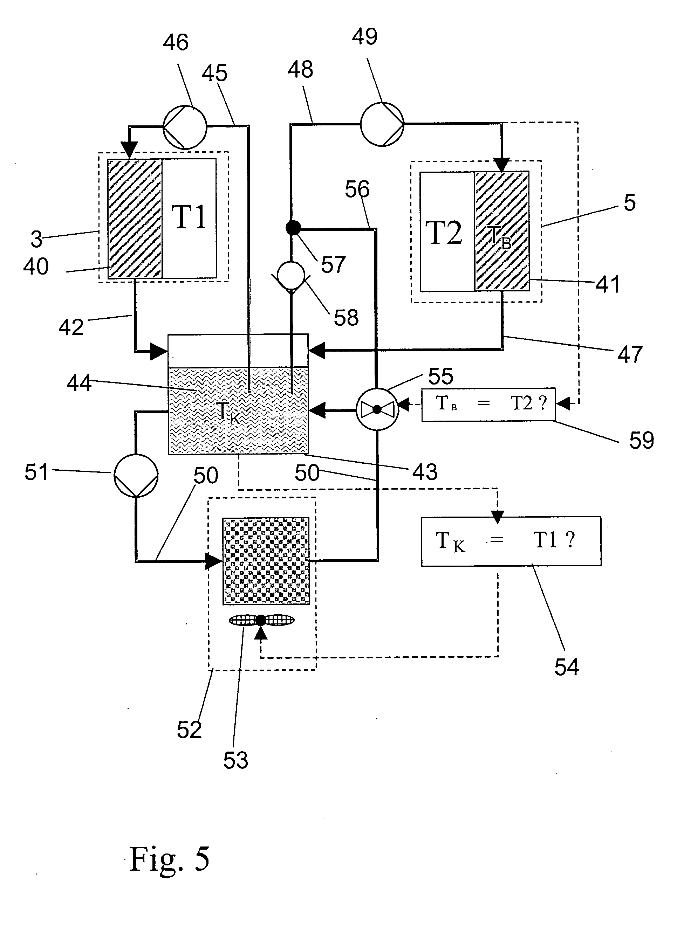

In Fig. 5 besitzen die beiden eingesetzten elektrochemischen Wandlergruppen, insbesondere Elektrolysevorrichtung 3 und Brennstoffzellenanordnung 5, differierende Vorlauftemperaturen T1 für die Elektrolysevorrichtung 3 und T2 für die Brennstoffzellenanordnung 5, wobei im hier gezeigten Beispiel gilt T1>T2, so daß in Fig. 5, entsprechend den geänderten Randbedingungen und Vorgaben, ein gegenüber Fig. 4 leicht abgewandelter Aufbau der erfindungsgemäßen Anordnung erforderlich ist.

Das Grundschema der wechselseitigen Vorwärmung der jeweils inaktiven Wandlergruppe durch Nutzung der Abwärme der aktiven Wandlergruppe, unter Einsatz eines gemeinsam genutzten Kühlmittelreservoirs 43, entspricht hierbei dem in Fig. 4 und der zugehörigen Figurenbeschreibung dargelegten Aufbau. Allerdings ist nun, wie in Fig. 5 gezeigt, zusätzlich in den durch Kühlmitteltank 43 und Rückkühler 52 gebildeten Kühlkreislauf eingangsseitig vor dem Kühlmittelreservoir 43 ein Regelventil bzw. regelbares Dosierventil 55, zur Regulierung der Kühlmitteldurchflußmenge, in vorgenannten Kühlkreislauf zwischengeschaltet, von dem aus eine weitere kühlmittelführende Leitung 56 abzweigt und an der Verbindungsstelle 57 formschlüssig in die Zuleitung 48 zum Kühler 41 der Brennstoffzellenanordnung 5, welche die niedrigere Vorlauftemperatur T2 besitzt, einmündet. In die Zuleitung 48 zum Kühler 41 der Brennstoffzellenanordnung 5 ist zwischen dem Kühlmittelreservoir 43 und der Verbindungsstelle 57 ein Rückschlagventil 58 implementiert, welches bewirkt, daß über die Verbindungsstelle 57 in die Zuleitung 48 beigemischtes kühleres Kühlmittel 44 aus dem Rückkühler 52 nicht über die Zuleitung 48 in das Kühlmittelreservoir 43 gelangt. Das eingesetzte Rückschlagventil 58 kann hierbei verschiedenartig ausgestaltet sein, beispielsweise als Rückschlagventil mit oder ohne Feder sowie auch als entsperrbares Rückschlagventil.

Die Temperatur Tₖ des Kühlmittels 44 im Kühlmittelreservoir 43 wird mittels des Temperaturmessers der Temperaturregelvorrichtung, die auf die Ventilatoreneinheit 53 des Rückkühlers 52 sowie gegebenenfalls die Pumpe 51 wirkt, ermittelt, mit Hilfe des Sollwertvergleichers 54 mit der gerätespezifisch höheren Vorlauftemperatur T1 der Elektrolysevorrichtung 3 verglichen und durch Zusatz dem Rückkühler 52 entnommenen Kühlmittels 44 auf das Temperaturniveau der Vorlauftemperatur T1 der Elektrolysevorrichtung 3 geregelt.

Gleichzeitig wird mit einer weiteren Temperaturregelvorrichtung mit Temperaturmesser die Temperatur T_{B} des Kühlmittels 44 im Kühler 41 der Brennstoffzellenanordnung 5 erfaßt und mittels eines zugehörigen Sollwertvergleichers 59 mit dem Sollwert der gegenüber T1 niedrigeren Vorlauftemperatur T2 der Brennstoffzellenanordnung 5 verglichen. Liegt der erfaßte Istwert der Kühlmitteltemperatur T_{B} im Kühler 41 der Brennstoffzellenanordnung 5 oberhalb des Sollwertes ihrer Vorlauftemperatur T2, das heißt gilt T_{B} > T2, so wird vermittels des Regelventils 55 und der weiteren Temperaturregelvorrichtung mit Temperaturmesser und Sollwertvergleicher 59, die auf das Regelventil 55 wirkt, kühles Kühlmittel 44 aus dem Rückkühler 52 abgeführt und an der Verbindungsstelle 57, zur Einstellung der Vorlauftemperatur T2, in den Kühlmittelzulauf bzw. die Zuleitung 48 der Brennstoffzellenanordnung 5 beigemischt bzw. eingeleitet, wodurch auch bei unterschiedlichen Vorlauftemperaturen eine optimierte Vorwärmung der inaktiv geschalteten elektrochemischen Wandler sowie Kühlung der aktiv geschalteten elektrochemischen Wandler bei vergleichsweise geringem energetischen Aufwand gewährleistet ist.

Das erfindungsgemäße Verfahren läßt sich hierbei vorteilhaft auch beim Einsatz mehrerer unterschiedlicher Wandler- bzw. Gerätegruppen mit verschiedenen Vorlauftemperaturen einsetzen, indem stets die Temperatur T_{K} des Kühlmittels 44 im Kühlmittelreservoir 43 auf die höchste auftretende gerätespezifische Vorlauftemperatur geregelt wird und über entsprechende Regelventile 55 kühles Kühlmittel aus einem oder mehreren Rückkühlern 52 dosiert in den Zulauf des Kühlers 41 der jeweiligen Wandlergruppe zur Einstellung des Sollwertes der jeweiligen Vorlauftemperatur zugemischt bzw. eingeleitet wird.

Hierdurch ist auch bei unterschiedlichen Vorlauftemperaturen T1 und T2 von abwechselnd in Betrieb genommenen elektrochemischen Wandlergruppen 3 und 5 erfindungsgemäß sowohl eine optimierte Vorwärmung und damit eine effiziente schnellstmögliche Inbetriebnahme der inaktiven als auch eine optimierte Kühlung der aktiven Wandlerbzw. Gerätegruppen gewährleistet.

Vorteilhaft läßt sich das erfindungsgemäße Verfahren auch bei bedarfsabhängig in Betrieb zu nehmenden Gerätegruppen einsetzen. Sind in einem Energiespeichersystem mehrere Wandler- oder Gerätegruppen der gleichen Bauart implementiert und werden für den laufenden Betrieb momentan nicht alle Gerätegruppen benötigt, so bilden die überzähligen momentan inaktiven Geräte bzw. Gerätegruppen eine Art Reserve, die erst im Bedarfsfalle, beispielsweise bei schadensbedingtem Ausfall einer bislang aktiv geschalteten Gerätegruppe, bei anfallenden Wartungsarbeiten bei einer aktiv geschalteten Gerätegruppe oder erhöhtem Leistungsbedarf, ersatzweise oder zusätzlich in Betrieb genommen werden. Auch hier ist erfindungsgemäß eine Vorwärmung der zeitweise inaktiven Gerätegruppen durch Nutzung der Abwärme der aktiv geschalteten, im Betrieb befindlichen Gerätegruppen zum Erhalt und der Gewährleistung eines bestmöglichen Bereitschaftszustandes möglich und empfehlenswert.

## Patentansprüche

1. Vorrichtung zur wechselseitigen Kühlung und Vorwärmung gekoppelter elektrochemischer Wandler (3,5) mit Kühler (40,41), wobei die Kühlkreisläufe mindestens zweier abwechselnd betriebener elektrochemischer Wandler (3,5) über jeweils ein gemeinsames Kühlmittelreservoir (43) miteinander gekoppelt sind, und die Temperatur T_{K} des Kühlmittels (44) des Kühlmittelreservoirs (43) mittels einer Temperaturregelvorrichtung mit Temperaturmesser, Sollwertvergleicher (54) und mindestens einem mit dem Kühlmittelreservoir (43) in einem gemeinsamen Kühlkreislauf gekoppelten Rückkühler (52) mit Ventilatoreneinheit (53) auf einen durch die Vorlauftemperaturen (T1,T2) der elektrochemischen Wandler (3,5) vorgegebenen Sollwert T_{S} geregelt ist.

2. Vorrichtung nach Anspruch 1, **dadurch gekennzeichnet, daß** bei differierenden Vorlauftemperaturen (T1,T2) der eingesetzten elektrochemischen Wandler (3,5) der Eingang des eingesetzten Rückkühlers (52) mit dem Kühlmittelreservoir (43) verbunden ist, und der Ausgang des Rückkühlers (52) über jeweils ein zwischengeschaltetes Regelventil bzw. regelbares Dosierventil (55) sowohl mit dem Kühlmittelreservoir (43) als auch, über jeweils eine weitere kühlmittelführende Leitung (56) sowie eine Verbindungsstelle (57), mit einer Zuleitung (48) und damit dem Kühlkreislauf des jeweiligen elektrochemischen Wandlers (5) mit niedrigerer Vorlauftemperatur (T2) als der vorgegebene Sollwert T_{S} der Kühlmitteltemperatur (T_{K}) im Kühlmittelreservoir (43) verbunden ist.

3. Vorrichtung nach Anspruch 2, **dadurch gekennzeichnet, daß** für jeden elektrochemischen Wandler (5), dessen Vorlauftemperatur (T2) niedriger als der vorgegebene Sollwert T_{S} der Kühlmitteltemperatur (T_{K}) im Kühlmittelreservoir (43) ist, eine separate Temperaturregelvorrichtung mit Temperaturmesser und Sollwertvergleicher (59) zur temperaturabhängigen Regelung des jeweils zugehörigen Regelventils (55) und damit seiner Kühlmitteldurchflussmenge eingesetzt ist.

4. Vorrichtung nach einem der Ansprüche 2 oder 3, **dadurch gekennzeichnet, daß** in die Zuleitung (48) zum Kühler (41) des jeweiligen elektrochemischen Wandlers (5) mit niedrigerer Vorlauftemperatur (T2) als der vorgegebene Sollwert T_{S} der Kühlmitteltemperatur (T_{K}) im Kühlmittelreservoir (43) zwischen dem Kühlmittelreservoir (43) und der Verbindungsstelle (57) ein Rückschlagventil (58) eingefügt bzw. zwischengeschaltet ist, welches bewirkt, daß über die Verbindungsstelle (57) in die Zuleitung (48) beigemischtes kühleres Kühlmittel (44) aus dem Rückkühler (52) nicht über die Zuleitung (48) in das Kühlmittelreservoir (43) gelangt.

5. Vorrichtung nach einem der Ansprüche 1 bis 4, **dadurch gekennzeichnet, daß** es sich bei mindestens einem elektrochemischen Wandler (3,5) um eine Elektrolysevorrichtung (3) handelt.

6. Vorrichtung nach einem der Ansprüche 1 bis 5, **dadurch gekennzeichnet, daß** es sich bei mindestens einem elektrochemischen Wandler (3,5) um eine Brennstoffzellenanordnung (5) handelt.

7. Vorrichtung nach einem der Ansprüche 1 bis 6, **dadurch gekennzeichnet, daß** es sich bei mindestens einem elektrochemischen Wandler (3,5) um einen wasserstoffertüchtigten Verbrennungsmotor oder eine Wasserstoffturbine mit angekoppeltem elektrischen Generator handelt.

8. Verfahren zur wechselseitigen Kühlung und Vorwärmung gekoppelter elektrochemischer Wandler (3,5) mit Kühler (40,41), wobei die Kühlkreisläufe mindestens zweier abwechselnd betriebener elektrochemischer Wandler (3,5) über jeweils ein gemeinsames Kühlmittelreservoir (43) miteinander gekoppelt werden und die Temperatur T_{K} des Kühlmittels (44) des Kühlmittelreservoirs (43) mittels einer Temperaturregelvorrichtung mit Temperaturmesser, Sollwertvergleicher (54) und mindestens einem mit dem Kühlmittelreservoir (43) in einem gemeinsamen Kühlkreislauf gekoppelten Rückkühler (52) mit Ventilatoreneinheit (53) auf einen durch die Vorlauftemperaturen (T1,T2) der elektrochemischen Wandler (3,5) vorgegebenen Sollwert T_{S} geregelt wird.

9. Verfahren nach Anspruch 8, **dadurch gekennzeichnet, daß** der Sollwert T_{S} der Kühlmitteltemperatur (T_{K}) im Kühlmittelreservoir (43) durch die Vorlauftemperatur (T1,T2) eines der eingesetzten elektrochemischen Wandler (3,5) vorgegeben und die Kühlmitteltemperatur T_{K} im Kühlmittelreservoir (43) mittels der Temperaturregelvorrichtung auf diesen Sollwert Tₛ geregelt wird.

10. Verfahren nach einem der Ansprüche 8 oder 9, **dadurch gekennzeichnet, daß** bei differierenden Vorlauftemperaturen (T1,T2) der elektrochemischen Wandler (3,5) durch geregeltes Beimischen von kühlerem Kühlmittel (44) aus dem Rückkühler (52) in den jeweiligen Kühlkreislauf des elektrochemischen Wandlers (5) mit niedrigerer Vorlauftemperatur (T2) als der vorgegebene Sollwert T_{S} eine Einstellung der jeweils optimalen Vorlauftemperatur des jeweiligen elektrochemischen Wandlers (5) erreicht wird.

11. Verfahren nach Anspruch 10, **dadurch gekennzeichnet, daß** der Sollwert T_{S} der Kühlmitteltemperatur (T_{K}) im Kühlmittelreservoir (43) durch die gerätespezifisch höchste Vorlauftemperatur (T1) bestimmt und die Kühlmitteltemperatur T_{K} im Kühlmittelreservoir (43) auf diesen Sollwert T_{S} geregelt wird.

12. Verfahren nach einem der Ansprüche 10 oder 11, **dadurch gekennzeichnet, daß** für jeden elektrochemischen Wandler (5), dessen Vorlauftemperatur (T2) niedriger als der vorgegebene Sollwert T_{S} der Kühlmitteltemperatur (T_{K}) im Kühlmittelreservoir (43) ist, das geregelte Beimischen von kühlerem Kühlmittel (44) aus dem Rückkühler (52) in den jeweiligen Kühlkreislauf mittels einer separaten Temperaturregelvorrichtung mit Temperaturmesser und Sollwertvergleicher (59) sowie vermittels des jeweils zugehörigen Regelventils (55) erfolgt.

13. Verfahren nach einem der Ansprüche 10 bis 12, **dadurch gekennzeichnet, daß** das in die Zuleitung (48) des jeweiligen elektrochemischen Wandlers (5) beigemischte kühlere Kühlmittel (44) mittels eines Rückschlagventils (58) daran gehindert wird über die Zuleitung (48) in das Kühlmittelreservoir (43) zu gelangen.
